Europäisches Patentamt

(19) European Patent Office

Office européen des brevets

(11) Numéro de publication : **0 303 547 B1**

(12) FASCICULE DE BREVET EUROPEEN

(45) Date de publication du fascicule du brevet :
16.10.91 Bulletin 91/42

(51) Int. Cl.⁵ : **G01H 11/04, H04R 15/00**

(21) Numéro de dépôt : 88402096.7

(22) Date de dépôt : 11.08.88

(54) **Transducteur omnidirectionnel d'ondes élastiques à large bande passante.**

(30) Priorité : 14.08.87 FR 8711598

(43) Date de publication de la demande :
15.02.89 Bulletin 89/07

(45) Mention de la délivrance du brevet :
16.10.91 Bulletin 91/42

(84) Etats contractants désignés :
DE GB IT NL

(56) Documents cités :
EP-A- 0 063 094
EP-A- 0 075 911
EP-A- 0 177 383
GB-A- 526 641
US-A- 1 653 045
US-A- 2 233 244
ENGINEERING, vol. 207, no. 5360, 17 janvier
1969, pages 117-120, Engineering Ltd, Londres, GB; B.K. GAZEY: "Underwater electroacoustic transducers"

(73) Titulaire : COMMISSARIAT A L'ENERGIE
ATOMIQUE Etablissement de Caractère
Scientifique Technique et Industriel
31/33, rue de la Fédération
F-75015 Paris (FR)
Titulaire : Klein, Siegfried, Dr.
42, rue de la Tour d'Auvergne
F-75009 Paris (FR)

(72) Inventeur : Klein, Siegfried
42, rue de la Tour d'Auvergne
F-75009 PARIS (FR)

(74) Mandataire : Mongrédien, André et al
c/o BREVATOME 25, rue de Ponthieu
F-75008 Paris (FR)

Jouve, 18, rue Saint-Denis, 75001 PARIS

## Description

La présente invention a pour objet un transducteur omnidirectionnel d'ondes élastiques à large bande passante. Par ondes élastiques, on entend une onde de pression se propageant dans un liquide ou dans un gaz. Dans ce dernier cas, une onde élastique est souvent appelée onde acoustique. Le transducteur peut être utilisé en émission, et il convertit alors un signal électrique en une onde élastique, ou en réception, et il convertit alors une onde élastique en un signal électrique. Le transducteur de l'invention est adapté notamment à la transmission des ondes sonores et ultrasonores.

La transmission sous-marine de signaux élastiques de fréquence élevée (ondes ultrasonores) constitue un domaine privilégié d'application de l'invention. Le transducteur peut y être utilisé comme hydrophone aussi bien en récepteur qu'en émetteur. La large bande passante de ce transducteur autorise la transmission de signaux de fréquence élevée tels que par exemple des signaux de télévision spécialement adaptés pour la transmission dans l'eau (bande passante d'environ 200 kHz), des signaux de parole ou tous autres signaux d'information.

La reproduction sonore de haute-fidélité constitue un autre domaine privilégié d'application de l'invention. Le transducteur utilisé en émission réalise un haut-parleur de hautes performances à large bande passante.

Le principe du transducteur de l'invention est fondé sur l'effet de magnétostriction. La magnétostriction est la propriété pour certains corps de subir une modification géométrique (contraction, dilatation, flexion, torsion,...) lorsqu'ils sont soumis à l'influence d'un champ magnétique. Les alliages métalliques et en particulier les composés ferromagnétiques sont des matériaux magnétostrictifs.

Des transducteurs omnidirectionnels de ce type ont été décrits par les demandeurs dans les documents FR-A-2569930, FR-A-2573269 et FR-A-2573270. Ils comprennent principalement une membrane rigide en matériau magnétostrictif et un moyen de commande électrique associé. Chaque élément de surface de cette membrane constitue un transducteur unidirectionnel d'une onde élastique suivant sa direction normale.

La forme de la membrane peut être quelconque. Cette forme définit les directions d'émission d'une onde élastique comme les directions normales à chaque élément de surface de la membrane. Une membrane en forme de surface fermée (sphère, ellipsoïde, cylindre fermé par deux hémisphères,...) confère ainsi au transducteur un caractère omnidirectionnel. La membrane du transducteur peut également être en forme de surface non fermée ; dans le cas d'une forme hémisphérique par exemple, le transducteur est omnidirectionnel dans un demi-plan de l'espace.

Le moyen de commande électrique associé à la membrane est muni de deux bornes électriques et est disposé à proximité d'au moins une partie de la membrane. Il permet de créer au voisinage de cette membrane un champ magnétique sensiblement homogène en réponse à un signal électrique appliqué entre ses bornes ; ce champ magnétique induit une modification géométrique (dilatation ou contraction) de chaque élément de surface de la membrane, ce qui produit une onde élastique. Inversement, lorsqu'une onde élastique atteint la membrane, la modification géométrique de la membrane sous l'action de cette onde élastique (pression, dépression) modifie la valeur du champ magnétique de polarisation du transducteur. Le moyen de commande est conçu pour détecter les variations de ce champ magnétique de polarisation et de ce fait va délivrer un signal électrique correspondant à la variation de ce champ.

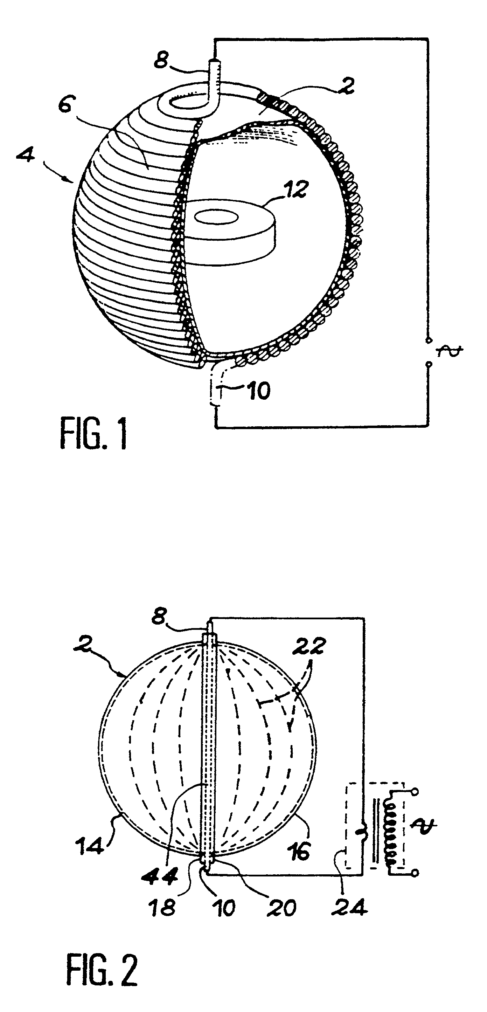

La figure 1 illustre un mode de réalisation d'un transducteur omnidirectionnel conforme aux documents cités ci-dessus. Sur cette figure, la membrane magnétostrictive 2 a la forme d'une sphère et le moyen de commande 4 est constitué par un conducteur électrique 6 isolé et bobiné autour de cette membrane. Les extrémités 8, 10 du conducteur électrique 6 forment les bornes du moyen de commande électrique permettant, en émission, d'appliquer un signal de tension électrique alternatif qui est transformé par la membrane sphérique en une onde élastique et, en réception, de délivrer un signal de tension correspondant à une onde élastique reçue sur la membrane sphérique.

Le transducteur comprend également un moyen de polarisation continue de la membrane qui peut être constitué par est un aimant 12, comme représenté sur la figure 1, ou qui peut être une source de courant continu connectée aux extrémités 8, 10. Pour des transducteurs sphériques ayant un diamètre supérieur à environ 15 cm, seule l'utilisation d'une source de courant est envisageable, à cause du poids trop important que constitueraient les aimants. La polarisation continue est nécessaire lorsque le transducteur est utilisé en réception, c'est-à-dire lorsqu'il convertit une onde élastique en un signal électrique, et est souhaitable, bien que non obligatoire, lorsque le transducteur est utilisé en émission.

Dans le mode de réalisation de la figure 1, la membrane sphérique est réalisée en un seul élément. Ceci est adapté à un transducteur ayant un diamètre de quelques centimètres, mais ne l'est pas pour un transducteur ayant un diamètre de plusieurs dizaines de centimètres. Pour la réalisation d'un transducteur de diamètre supérieur à quelques centimètres, on réalise avantageusement la membrane sphérique sous la forme de deux éléments hémisphériques qui sont ensuite réunis.

Un tel mode de réalisation, conforme aux documents cités ci-dessus, est représenté sur la figure 2.

La membrane sphérique 2 est composée de deux hémisphères 14, 16 qui comportent chacun à leur base une collerette 18, 20. Celles-ci permettent de faciliter le raccordement des deux hémisphères, qui peut être réalisé par soudage à l'étain ou soudage sous argon, le cordon de soudure venant s'appuyer sur chaque collerette.

Les bornes électriques 8, 10 du moyen de commande sont réalisées par exemple en deux points diamétralement opposés de la sphère situés sur le cordon de soudure. Ceci permet d'avoir une sphère pulsante pratiquement homogène puisque tous les méridiens 22 reliant les deux bornes électriques 8, 10, qui constituent les pôles de la sphère, sont identiques à l'exception des seuls méridiens correspondant au cordon de soudure 44. En fait, la densité de courant le long d'un méridien diminue avec la distance aux bornes électriques, puisque le courant est constant et que la surface sur lequel il se répartit augmente. Cependant, cette différence de densité de courant, donc d'intensité de vibration, est compensée par la soudure des bornes électriques, qui apporte une certaine rigidité de la membrane au voisinage des bornes électriques.

Dans le transducteur de la figure 2, la résistance électrique entre les bornes électriques 8, 10 est faible (quelques dizièmes d'ohms), ce qui rend nécessaire l'utilisation d'un adaptateur d'impédance. Cette fonction est assurée par le transformateur 24.

Le transducteur représenté sur la figure 2 comprend également un moyen de polarisation continue qui peut être constitué par un aimant permanent, comme représenté sur la figure 1, si le transducteur a un diamètre inférieur à 15 cm environ.

L'aimant permanent est placé au centre de la sphère. Il est maintenu en position par exemple en étant noyé dans un matériau de remplissage du volume interne de la sphère.

Il a été constaté que l'aimant permanent n'engendrait pas un champ magnétique parfaitement homogène dans la membrane magnétostrictive. Ceci a pour conséquence une limitation des performances du transducteur dont tous les éléments de surface de la membrane ne réagissent pas exactement avec la même amplitude à une même onde élastique ou à un même signal électrique.

L'invention a pour but un perfectionnement aux transducteurs décrits dans les documents cités ci-dessus, afin que la membrane magnétostrictive soit baignée dans un champ magnétique continu aussi homogène que possible.

Ce perfectionnement consiste à ajouter au transducteur une pièce à perméabilité magnétique élevée, ayant la même forme que la membrane magnétostrictive, pour transmettre le champ magnétique créé par l'aimant permanent.

De manière précise, l'invention a pour objet un transducteur omnidirectionel d'ondes élastiques à large bande passante comprenant :

— une membrane magnétostrictive rigide comportant une face avant et une face arrière, chaque élément de surface de la membrane constituant, au moins du côté de la face avant, un transducteur unidirectionnel d'ondes élastiques suivant sa direction normale,

— un moyen de commande électrique muni de deux bornes électriques pour créer au voisinage de la membrane un champ magnétique homogène en rapport avec un signal électrique appliqué aux bornes du moyen de commande ou pour délivrer un signal électrique en rapport avec la variation du champ magnétique dans la membrane en fonction d'une onde élastique reçue, et

— un moyen de polarisation continue de la membrane comportant un aimant permanent, ledit transducteur étant caractérisé en ce que

— le moyen de polarisation continue comporte en outre une pièce à perméabilité magnétique élevée, ladite pièce ayant une forme sensiblement identique à celle de la membrane et comprenant une face externe et une face interne, ladite face externe étant au voisinage de la face arrière de ladite membrane, et

• l'aimant permanent est disposé en contact avec ladite pièce.

Selon un premier mode préféré de réalisation, ladite membrane magnétostrictive a une forme hémisphérique, ladite pièce à perméabilité magnétique élevée a une forme hémisphérique et est emboîtée dans ladite membrane hémisphérique, et ledit aimant permanent comprend au moins un anneau plat, lesdits anneaux ayant un diamètre légèrement inférieur au diamètre intérieur de ladite pièce et étant placés dans ladite pièce.

Selon un second mode préféré de réalisation, ladite membrane est composée de deux éléments hémisphériques réunis pour former une sphère, ladite pièce est composée de deux parties hémisphériques disposées chacune dans un élément hémisphérique composant ladite membrane, ledit aimant permanent comprend au moins un anneau plat disposé à l'intérieur de ladite pièce.

Dans chacun de ces deux modes de réalisation, l'aimant permanent peut comprendre une pluralité d'anneaux plats empilés, de diamètres éventuellement différents.

Selon une caractéristique secondaire, le transducteur selon le second mode préféré de réalisation comprend une plaque amagnétique, ladite plaque ayant la forme d'un anneau plat de diamètre légèrement supérieur au diamètre des éléments hémiphériques et comportant une première face et une deuxième face, chaque partie de ladite pièce étant placée sur une face de ladite plaque.

Les caractéristiques et avantages de l'invention ressortiront mieux de la description qui va suivre, donnée à titre illustratif mais non limitatif, en référence aux dessins annexés, sur lesquels :

— les figures 1 et 2, déjà décrites, illustrent des transducteurs omnidirectionnels d'ondes élastiques connus,

— les figures 3 et 4 illustrent un mode de réalisation d'un transducteur omnidirectionnel selon l'invention, respectivement en vue de dessus en coupe suivant l'axe AA',

— la figure 5 illustre un autre mode de réalisation du transducteur selon l'invention,

— les figures 6a-6d illustrent schématiquement d'autres variantes de réalisation du transducteur selon l'invention.

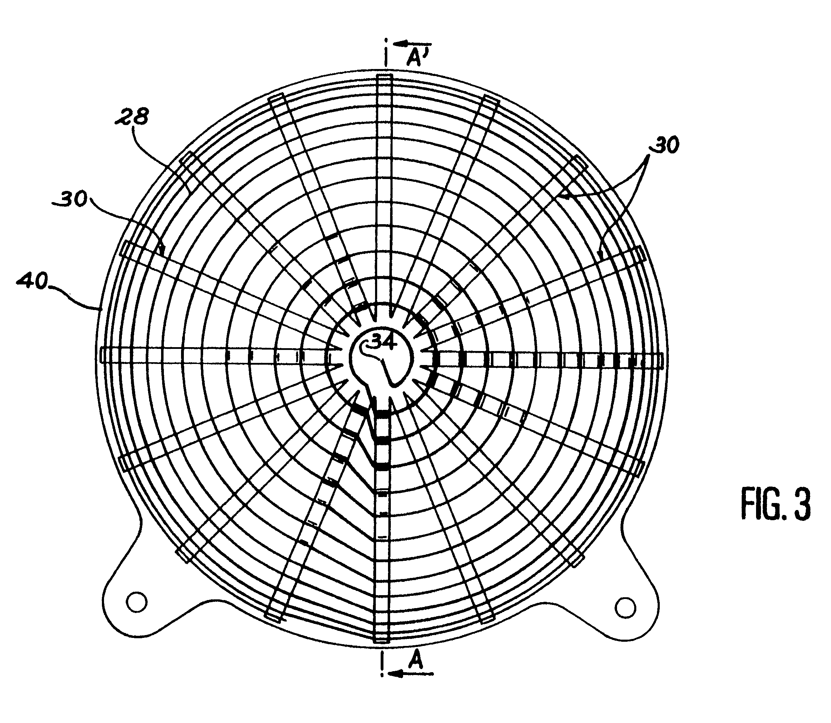

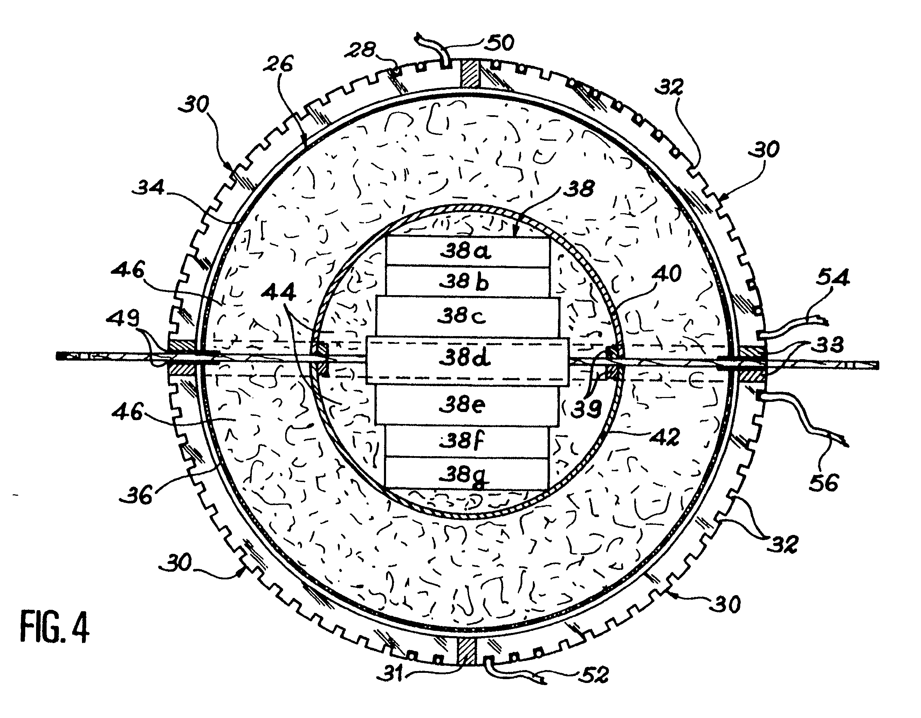

Un premier mode de réalisation du transducteur selon l'invention est représenté sur les figures 3 et 4. Comme dans le transducteur connu représenté sur la figure 1, le transducteur représenté sur les figures 3 et 4 comprend une membrane magnétostrictive 26 sphérique autour de laquelle est bobiné un fil conducteur 28.

Dans le mode de réalisation représenté sur la figure 1, le fil conducteur est bobiné directement sur la membrane magnétostrictive. Ce type de réalisation est bien adapté à des transducteurs ayant un diamètre de quelques centimètres.

Le mode de réalisation représenté sur les figures 3 et 4 est différent et est plus avantageux pour des transducteurs ayant un diamètre supérieur. En effet, dans ce cas, il est préférable, en particulier pour des raisons d'encombrement, de réaliser deux éléments magnétostrictifs hémisphériques 34, 36 que l'on réunit ensuite, plutôt que de réaliser directement une sphère magnétostrictive.

Un bobinage est réalisé indépendamment sur chaque élément hémisphérique 34, 36. Pour cela, on utilise un ensemble de supports de bobinage 30, ces supports formant chacun un quart de cercle disposé suivant un méridien de l'élément hémisphérique. Ces supports de bobinage sont fixés, par collage ou autre, d'une part à un élément 31 situé au sommet de l'élément hémisphérique et, d'autre part, à un anneau 33 situé à la base de l'élément hémisphérique.

Chaque support de bobinage comporte un ensemble d'encoches 32 qui sont prévues pour recevoir le fil conducteur 28. Pour chaque élément hémisphérique 34, 36, le fil est bobiné du sommet de l'hémisphère vers la base.

Avant de fixer ensemble les deux éléments hémisphériques, on introduit le moyen de polarisation continue. Conformément à l'invention, ce moyen de polarisation continue comprend un aimant permanent et une pièce comportant un matériau à perméabilité magnétique élevée, cette pièce étant en contact avec l'aimant et permettant d'homogénéiser le champ magnétique à l'intérieur de la sphère.

L'aimant permanent 38 comprend par exemple un ensemble d'anneaux 38a-38g empilés. La pièce à perméabilité magnétique élevée est constituée par exemple de deux parties hémisphériques 40, 42 qui sont chacune placées dans un élément hémisphérique magnétostrictif.

Lorsque les deux parties hémisphériques sont réunies pour former une sphère, le champ magnétique est nul dans le plan de raccordement de ces parties hémisphériques. Pour pallier ce défaut, on peut ajouter à la base de chaque partie hémisphérique 40, 42 une rondelle 39, 41 d'égalisation du champ magnétique.

Les parties hémisphériques 40, 42 peuvent être réalisées en fer doux d'épaisseur 2 mm. L'épaisseur doit être suffisante pour assurer une bonne répartition du champ magnétique et pour éviter que les parties hémisphériques entrent en résonance en même temps que la membrane magnétostrictive.

Pour atténuer les résonances résiduelles, le volume intérieur de la pièce sphérique 40, 42 peut être empli par un matériau 44 absorbant les ondes élastiques, tel que de la laine de verre tassée. Ceci assure également le maintien en position de l'aimant permanent 38.

De la même manière, l'espace entre les parties hémisphériques 40, 42 et les éléments hémisphériques magnétostrictifs 34, 36 peut être comblé par un matériau 46 absorbant les ondes élastiques. Il est préférable d'utiliser ici de la laine de verre préformée afin que chaque partie hémisphérique 40, 42 soit positionnée correctement par rapport à l'élément hémisphérique magnétostrictif correspondant 34, 36.

La distance entre l'élément hémisphérique magnétostrictif et la partie hémisphérique de la pièce n'est pas importante. Elle peut être de quelques millimètres à quelques centimètres.

Les deux moitiés du transducteur sont réunies par l'intermédiaire d'une plaque 48 sur laquelle elles sont chacune fixées. Cette plaque est réalisée dans un matériau amagnétique (bois, laiton ou autre) et comporte un évidement dans lequel est placé l'un des anneaux 38d de l'aimant permanent 38. Un joint en caoutchouc 49 est prévu entre la plaque 48 et les éléments hémisphériques magnétostrictifs 34, 36.

Les fils bobinés sur chaque élément hémisphérique magnétostrictif 34, 36 comportent chacun une extrémité 50, 52 à proximité du sommet de l'hémisphère et une extrémité 54, 56 à la base de l'hémisphère. Les extrémités 54 et 56 sont reliées pour réaliser un bobinage complet de la sphère comme dans le transducteur représenté sur la figure 1 ; les extrémités 50 et 52 constituent les bornes du moyen de commande.

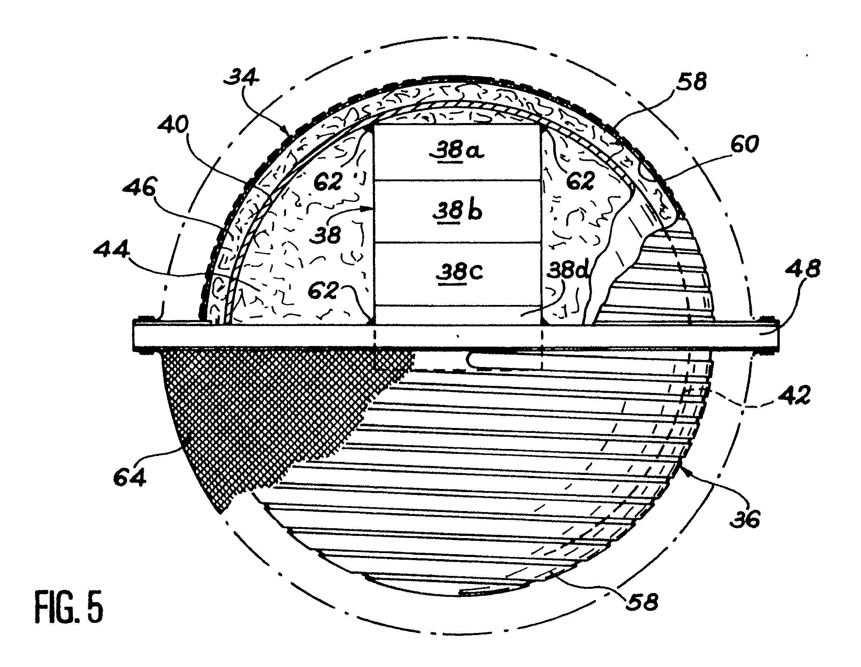

On a représenté sur la figure 5 un second mode de réalisation du transducteur selon l'invention. Sur la figure 5, les éléments identiques à ceux des figures 3 et 4 portent les mêmes références.

Chaque élément hémisphérique magnétostrictif 34, 36 est constitué d'un ruban magnétostrictif 58 fixé, par exemple par collage, en spirale sur un support 60. Ce support a une forme hémisphérique ; il est réalisé avantageusement dans une matière absorbant les ondes élastiques, par exemple en caoutchouc nitrile D55. Ce support a une épaisseur de quelques dixièmes de millimètres.

Chaque bande magnétostrictive 58 a deux extrémités dont l'une est située au sommet de l'hémisphère et l'autre à la base de l'hémisphère. Les deux extrémités situées à la base de chaque hémisphère sont reliées entre elles pour obtenir une bobine magnétostrictive sphérique complète ; les deux extrémités situées au sommet de chaque hémisphère constituent les bornes du moyen de commande.

Dans le transducteur de la figure 5, le signal électrique est donc appliqué directement au matériau magnétostrictif comme dans le transducteur de la figure 2.

Les deux hémisphères sont fixés chacun sur une plaque 48 pour former un transducteur sphérique. De manière connue, ce transducteur contient un moyen de polarisation continue de la membrane magnétostrictive 34, 36. Ce moyen de polarisation continue est constitué par un ensemble d'anneaux aimantés empilés 38a, 38b,...

Selon l'invention, le transducteur contient en outre une pièce à perméabilité magnétique élevée, en contact avec le moyen de polarisation continue, ayant pour fonction d'homogénéiser le champ magnétique au voisinage de la membrane magnétostrictive. Cette pièce est constituée de deux parties hémisphériques 40, 42 correspondant respectivement aux éléments hémisphériques magnétostrictifs 34, 36.

Cette pièce contient les anneaux aimantés 38a, 38b,... Ceux-ci peuvent être maintenus en position par des joints de fixation 62. Le volume intérieur de la pièce est rempli d'un matériau 44 absorbant les ondes élastiques, par exemple de la laine de verre tassée, qui contribue également au maintien en position des anneaux aimantés 38a, 38b,... Le volume entre chaque partie hémisphérique 40, 42 de la pièce à perméabilité magnétique élevée et l'élément hémisphérique magnétostrictif 34, 36, ou plus exactement le support 60, est rempli également d'un matériau 46 absorbant les ondes élastiques, par exemple de la laine de verre préformée, ce qui assure un positionnement relatif correct des parties hémisphériques 40, 42 et du support 60.

Le transducteur de la figure 5 est complété par une grille de protection 64 composée de deux hémisphères fixés sur la plaque 48 et recouvrant les éléments hémisphériques magnétostrictifs 34, 36.

Les figures 3 à 5 illustrent deux modes de réalisation d'un transducteur omnidirectionnel d'ondes élastiques selon l'invention.

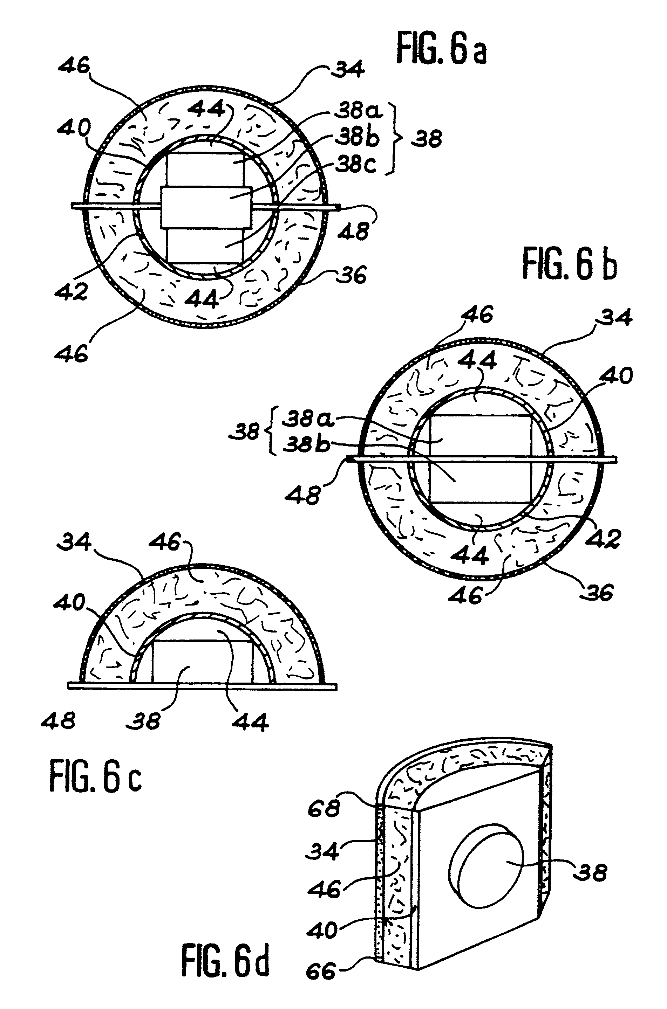

Ces transducteurs sont conformes à la coupe schématique représentée sur la figure 6a : la membrane magnétostrictive est composée de deux éléments hémisphériques 34, 36 ; la pièce à perméabilité magnétique élevée est également composée de deux parties hémisphériques 40, 42 ; un aimant 38, composé de plusieurs anneaux 38a, 38b, 38c empilés, est placé à l'intérieur de la pièce et en contact avec celle-ci. Sur cette figure, l'aimant 38 traverse la plaque 48 de raccordement des deux hémisphères.

La figure 6b représente en coupe un transducteur légèrement différent. La plaque 48 n'est pas évidée ; des anneaux aimantés 38a, 38b sont placés sur chacune de ses faces.

Les transducteurs représentés sur les figures 1, 5, 6a et 6b ont une membrane magnétostrictive sphérique. Un tel transducteur, parfaitement omnidirectionnel, est particulièrement adapté à la reproduction sonore de haute fidélité.

L'invention n'est cependant pas limitée à ce mode de réalisation, mais s'applique au contraire quelle que soit la forme de la membrane magnétostrictive.

Cette membrane peut être par exemple hémisphérique, comme représenté sur la figure 6c, ou en forme de portion de cylindrique, comme représenté sur la figure 6d. Sur ces figures, les éléments identiques à ceux des figures 6a, 6b portent les mêmes références.

Le transducteur représenté en coupe sur la figure 6c correspond à un hémisphère du transducteur représenté sur la figure 6b.

Le transducteur représenté en perspective sur la figure 6d comprend une membrane magnétostrictive 34 en forme de portion de cylindre, un matériau 46 absorbant les ondes élastiques qui est fixé sur la face interne de la membrane magnétostrictive, une pièce 40 à perméabilité magnétique élevée et un aimant permanent 38.

Une face de la pièce 40 a la même forme que la face interne de la membrane magnétostrictive ; cette face est fixée au matériau 46. L'autre face de la pièce 40 est plane ; l'aimant permanent 38 est fixé sur cette autre face.

Les bornes du moyen de commande de ce transducteur sont constituées par des conducteurs électriques 66, 68 en forme d'arc de cercle et connectées sur deux bords opposés de la membrane magnétostrictive.

On a décrit en référence aux figures des modes de réalisation particuliers du transducteur selon l'invention. Il est bien entendu que l'invention n'est pas limitée à ces exemples, mais s'applique à tous les transducteurs comportant une membrane magnétostrictive, quelle que soit sa forme, et notamment à tous les transducteurs décrits dans les documents FR-A-2569930, FR-A-2573269 et FR-A-2573270.

## Revendications

1. Transducteur omnidirectionnel d'ondes élastiques à large bande passante comprenant :

— une membrane magnétostrictive rigide (34, 36) comportant une face avant et une face arrière, chaque élément de surface de la membrane constituant, au moins du côté de la face avant, un transducteur unidirectionnel d'ondes élastiques suivant sa direction normale,

— un moyen de commande électrique (28) muni de deux bornes électriques (50, 52) pour créer au voisinage de la membrane un champ magnétique homogène en rapport avec un signal électrique appliqué aux bornes du moyen de commande ou pour délivrer un signal électrique en rapport avec la variation du champ magnétique dans la membrane en fonction d'une onde élastique reçue, et

— un moyen de polarisation continue de la membrane comportant un aimant permanent, ledit transducteur étant caractérisé en ce que

— le moyen de polarisation continue comporte en outre une pièce (40, 42) à perméabilité magnétique élevée, ladite pièce ayant une forme sensiblement identique à celle de la membrane magnétostrictive et comprenant une face externe et une face interne, ladite face externe étant au voisinage de la face arrière de ladite membrane, et

• l'aimant permanent (38) est disposé en contact avec ladite pièce.

2. Transducteur selon la revendication 1, caractérisé en ce que ladite membrane magnétostrictive a une forme hémisphérique, ladite pièce à perméabilité magnétique élevée a une forme hémisphérique et est emboîtée dans ladite membrane hémisphérique, et ledit aimant comprenant au moins un anneau plat, lesdits anneaux ayant un diamètre légèrement inférieur au diamètre intérieur de ladite pièce et étant placés dans ladite pièce.

3. Transducteur selon la revendication 1, caractérisé en ce que ladite membrane est composée de deux éléments hémisphériques réunis pour former une sphère, ladite pièce est composée de deux parties hémisphériques (40, 42) disposées chacune dans un élément hémisphérique composant ladite membrane, ledit aimant comprend au moins un anneau plat disposé à l'intérieur de ladite pièce.

4. Transducteur selon la revendication 3, caractérisé en ce qu'il comprend une plaque (48) amagnétique, ladite plaque ayant la forme d'un anneau plat de diamètre légèrement supérieur au diamètre des éléments hémiphériques et comportant une première face et une deuxième face, chaque partie (40, 42) de ladite pièce étant placée sur une face de ladite plaque.

5. Transducteur selon la revendication 4, caractérisé en ce que ledit aimant comprend deux éléments, en forme d'anneau, chaque élément dudit aimant étant disposé sur une face de ladite plaque.

6. Transducteur selon la revendication 4, caractérisé en ce que la plaque comporte un évidement, ledit aimant étant placé dans ledit évidement et étant en contact avec ladite plaque.

7. Transducteur selon l'une quelconque des revendications 2 à 6, caractérisé en ce que le volume interne de ladite pièce est remplie d'un matériau (44) absorbant les ondes élastiques.

8. Transducteur selon l'une quelconque des revendications 1 à 7, caractérisé en ce qu'il comprend un matériau (46, 60) absorbant les ondes élastiques entre la face arrière de la membrane magnétostrictive et la face externe de la pièce à perméabilité magnétique élevée.

## Patentansprüche

1. Breitband-Rundstrahlwandler von elastischen Wellen, enthaltend :

eine starr magnetostriktive Membran (34, 36), die eine Vorderseite und eine Hinterseite aufweist, wobei jedes Oberflächenelement der Membran wenigstens auf Seiten der Vorderseite einen unidirektionalen Wandler elastischer Wellen entsprechend ihrer normalen Richtung bildet,

eine elektrische Steuereinrichtung (28), die mit zwei elektrischen Anschlüssen (50, 52) versehen ist, um in Nachbarschaft der Membarn ein homogenes Magnetfeld in Übereinstimmung mit einem elektrischen Signal zu erzeugen, das an die Anschlüsse der Steuereinrichtung angelegt ist, oder um ein elektrisches Signal in Übereinstimmung mit der Änderung des Magnetfelds in der Membran in Abhängigkeit von einer aufgenommenen elastischen Welle abzugeben, und

eine Einrichtung zur Gleichpolarisierung der Membran, enhaltend einen Permanentmagneten, wobei der Wandler dadurch gekennzeichnet ist, daß die Einrichtung zur Gleichpolarisierung weiterhin ein Teil (40, 42) erhöhter magnetischer Permabilität enthält, das eine zur magnetostriktiven Membran im wesentlich identische Form aufweist und eine Außenseite und eine Innenseite aufweist, wobei die Außenseite der Hinterseite der Membran benachbart ist und der Permanentmagnet (38) mit dem genannten Teil in Berührung ist.

2. Wandler nach Anspruch 1, dadurch gekennzeichnet, daß die magnetostriktive Membran eine halbkugelige Form hat, das Teil erhöhter magnetischer Permeabilität eine halbkugelige Gestalt hat und in der genannten halbkugeligen Membran angeordnet ist, der Magnet wenigstens einen flachen Ring enthält mit einem Durchmesser, der leicht geringer als der Innendurchmesser des genannten Teils ist und in dem genannten Teil angeordnet ist.

3. Wandler nach Anspruch 1, dadurch gekennzeichnet, daß die Membran aus zwei halbkugeligen Teilen besteht, die zur Bildung einer Kugel zusammengefügt sind, das genannte Teil aus zwei halbkugeligen Abschnitten (40, 42) besteht, die jeweils in einem halbkugeligen, die Membran bildenden Element angeordnet sind, und der Magnet wenigstens einen flachen Ring aufweist, der im Innern des gesennten Teils angeordnet ist.

4. Wandler nach Anspruch J, dadurch gekennzeichnet, daß er eine amagnetische Platte (48) enthält, die die Form eines flachen Rings mit einem Durchmesser aufweist, der leicht größer als der Durchmesser der halbkugeligen Elemente ist und eine erste Seite und eine zweite Seite aufweist, wobei jeder Abschnitt (40,42) des genannten Teils auf einer Seite der genannten Platte angeordnet ist.

5. Wandler nach Anspruch 4, dadurch gekennzeichnet, daß der Magnet zwei ringförmige Elemente enthält, wobei jedes Element des Magneten auf einer Seite der genannten Platte angeordnet ist.

6. Wandler nach Anspruch 4, dadurch gekennzeichnet, daß die Platte eine Ausnehmung aufweist, der Magnet in der Ausnehmung angeordnet ist und mit der Platte in Berührung ist.

7. Wandler nach einem der Ansprüche 2 bis 6, dadurch gekennzeichnet, daß das Innenvolumen des genannten Teils mit einem Material (44) gefüllt ist, das die elastischen Wellen absorbiert.

8. Wandler nach einem der Ansprüche 1 bis 7, dadurch gekennzeichnet, daß er ein Material (46, 60) enthält, das die elastischen Wellen zwichen der Hinterseite der magnetostriktiven Membran und der Außenseite des Teils erhöhter magnetischer Permeabilität absorbiert.

## Claims

1. Wide pass band elactic wave omnidirectional transducer comprising a rigid magnetostrictive membrene (34, 36) having a front face and a rear face, each surface element of the membrane constituting, at least on the front face side, a unidirectional transducer of elastic waves in its normal direction, an electric control means (28) provided with two electric terminals (50, 52) for producing in the vicinity of the membrene a uniform magnetic field related to the electric signal applied to the terminals of the control means or for supplying an electric signal related to the variation of the magnetic field in the membrane as a function of the elastic wave received and a continuous polarization means of the membrane having a permanent magnet, the transducer being characterized in that the continuous polarization means also incorporates a high magnetic permeability part (40, 42), which has substantially identical shape to that of the membrane and has an outer face and an inner face, said outer face being in the vicinity of the rear face of the membrane and the permanent magnet (38) is positioned in contact with said part.

2. Transducer according to claim 1, characterized in that the magnetostrictive membrane is hemispherical, the high magnetic permeability part having a hemispherical shape and being fitted into the hemispherical membrane and said magnet has at least one flat ring, the rings having a slightly smaller diameter than the internal diameter of the part and are placed on the latter.

3. Transducer according to claim 1, characterized in that the membrane is constituted by two hemispherical elements joined to form a sphere, said part being formed from two hemispherical portions (40, 42), each located in a hemispherical element constituting said membrane, said magnet comprising at least one flat ring located in the interior of said part.

4. Transducer according to claim 3, characterized in that it comprises an amagnetic plate 48, which is shaped like a flat ring having a slightly larger diameter than that of the hemispherical elements and having a first face and a second face, each portion (40, 42) of said part being placed on one face of said plate.

5. Transducer according to claim 4, characterized in that said magnet comprises two ring-like elements, each element of said magnet being disposed on one face of said plate.

6. Transducer according to claim 4, characterized in that the plate has a recess, said magnet being placed in said recess and is in contact with said plate.

7. Transducer according to any one of the claims 2 to 6, characterized in that the internal volume of said part is filled with an elastic wave-absorbing material (44).

8. Transducer according to any one of the claims 1 to 7, characterized in that it comprises an elastic wave-absorbing material (46, 60) between the rear face of the magnetostrictive membrane and the outer face of the high magnetic permeability part.

FIG. 1

FIG. 2

FIG. 3

EP 0 303 547 B1

FIG. 4

EP 0 303 547 B1

FIG. 5

EP 0 303 547 B1

FIG. 6 a

46    34

44    38a
            38b  } 38
      38c

40

48

42    44    36

46

FIG. 6 b

46    34

44    40

38 { 38a
      38b

48

44    42

46    36

34    46

40

48    38    44

FIG. 6 c

68

34

46

38

40

66

FIG. 6 d